# FASCICULE DE BREVET EUROPEEN

(11) **EP 2 754 600 B1**
(45) Date de publication et mention de la délivrance du brevet: **06.01.2016**
(21) Numéro de dépôt: 14150345.8
(22) Date de dépôt: 07.01.2014
(51) Int. Cl.: B62D 3/12, F16H 55/28

(54) **Poussoir pour crémaillère de direction pourvu d'une bague élastique assurant sa suspension bidirectionnelle**
Druckstück für die Lenkungeinrichtung versehen mit einem Federring der die bidirektionale Federung sicherstellt
Yoke for a rack and pinion steering gear comprising an elastic ring to ensure the bidirectional suspension

(30) Priorité: 14.01.2013 FR 1350317
(43) Date de publication de la demande: 16.07.2014
(73) Titulaire: Jtekt Europe, 69540 Irigny (FR)
(72) Inventeur: Monnet, Roch, 69126 BRINDAS (FR); Crespo, Norberto, 69100 VILLEURBANNE (FR)
(74) Mandataire: Chevalier, Renaud Philippe

(56) Documents cités:
- EP-A1- 1 724 180
- DE-A1-102004 004 390
- FR-A1- 2 859 439
- US-A1- 2010 122 595

## Description

La présente invention se rapporte au domaine général des mécanismes de rattrapage de jeu employés notamment pour limiter les jeux d'engrènement au sein des modules de direction de véhicules automobiles.

Elle concerne plus particulièrement un poussoir destiné à venir en appui contre le dos d'une crémaillère, notamment d'une crémaillère de direction, afin de presser la denture de ladite crémaillère contre celle du pignon qui l'entraîne.

On connaît déjà, notamment par le document DE-2004 004390 A, des dispositifs comprenant un poussoir formant un piston qui est monté mobile en translation dans une chemise sous la contrainte d'un ressort hélicoïdal qui presse ledit poussoir contre la crémaillère, à l'encontre du pignon qui entraîne celle-ci.

Afin d'assurer un guidage relativement précis et un fonctionnement peu bruyant du poussoir dans la chemise, on munit généralement ledit poussoir de joints toriques, logés et étagés axialement, tels des segments, dans des gorges annulaires creusées dans la paroi latérale dudit poussoir.

Lesdits joints toriques restant en appui raclant contre la paroi interne de la chemise lors des mouvements axiaux alternés d'avance ou de recul du poussoir par rapport à la crémaillère soutenue par ce dernier, on limite ainsi le débattement radial dudit poussoir.

Si un tel agencement donne généralement satisfaction, il peut cependant souffrir parfois de certaines limitations.

En particulier, il peut arriver que, sous l'effet d'un choc subi par la direction, on observe un enfoncement assez important du poussoir, le caractère relativement lâche du maintien de la crémaillère par le ressort de rappel du poussoir pouvant ainsi faire apparaître ponctuellement des bruits de fonctionnement dans la direction.

Par ailleurs, les joints toriques peuvent être sujets à l'usure et au fluage par écrasement au contact de la chemise, ce qui peut occasionner l'apparition d'un jeu radial, et donc une certaine perte du maintien radial du poussoir qui peut être à l'origine, ici encore, de l'apparition de bruits lors du fonctionnement du module de direction.

Enfin, la mise en oeuvre d'une pluralité de joints toriques étagés nécessite un usinage adapté du poussoir, ainsi qu'une succession d'opérations d'assemblage, la multiplicité des joints tendant ainsi à accroître la complexité, et par conséquent le coût de fabrication du dispositif.

Les objets assignés à l'invention visent par conséquent à remédier aux inconvénients susmentionnés et à proposer un dispositif de rattrapage de jeu pour crémaillère qui présente une bonne efficacité, ainsi qu'une fiabilité et une robustesse accrues, tout en étant d'une relative simplicité.

Les objets assignés à l'invention sont atteints au moyen d'un dispositif de rattrapage de jeu pour crémaillère, ledit dispositif comprenant un poussoir destiné à venir exercer un effort de poussée contre une crémaillère, ledit poussoir étant monté mobile et guidé en translation, selon un axe de poussée (ZZ'), dans une chemise qui s'étend, selon ledit axe de poussée (ZZ'), entre une ouverture d'accès destinée à déboucher sur la crémaillère et une butée de retenue formant obstacle au recul axial du poussoir, le poussoir présentant un épaulement qui reçoit un organe élastique de suspension bidirectionnelle, ledit organe élastique étant ainsi engagé entre le poussoir et la chemise de sorte à former simultanément, d'un seul tenant, d'une part une cale élastique de suspension axiale qui assure un contact axial élastique entre l'épaulement du poussoir et la butée de retenue de la chemise, et d'autre part une cale élastique de suspension radiale qui assure un contact radial élastique, transversalement à l'axe de poussée (ZZ'), entre le poussoir et paroi interne de la chemise, le dispositif étant caractérisé en ce que le poussoir présente extérieurement des rainures axiales au moins dans sa portion recouverte par l'organe élastique de suspension bidirectionnelle.

Les objets assignés à l'invention sont également atteints au moyen d'un module de direction, de préférence de direction assistée, comportant au moins un pignon d'entraînement qui est entraîné par une colonne de direction et/ou un moteur d'assistance et qui engrène sur une crémaillère pour faire coulisser celle-ci, selon un axe de coulissement (YY'), dans un carter de direction, de sorte à pouvoir manoeuvrer des organes directeurs devant être couplés à ladite crémaillère, tels que des roues directrices, ledit module étant caractérisé en ce qu'il comporte au moins un dispositif de rattrapage de jeu selon l'invention, dont le poussoir vient presser transversalement la crémaillère contre le pignon, selon un axe de poussée (ZZ') sensiblement transverse à l'axe de coulissement (YY').

Avantageusement, en utilisant une même pièce déformable, en l'espèce un organe élastique de suspension, pour former simultanément un coussin amortisseur radial et un coussin amortisseur axial entre la chemise fixe et le poussoir mobile, l'invention permet d'assurer un maintien bidirectionnel souple et précis dudit poussoir, au moyen d'un montage particulièrement simple.

Plus particulièrement, l'organe élastique de suspension conforme à l'invention permet de pré-contraindre le poussoir dans la chemise selon deux directions sécantes, en l'espèce tant axialement que radialement, ce qui assure un guidage sensiblement sans jeu ni heurt en toutes circonstances.

De façon particulièrement avantageuse, le fait de borner axialement et radialement l'espace disponible pour l'organe de suspension permet par ailleurs de contenir au moins partiellement, lors du fonctionnement du dispositif, la déformation dudit organe de suspension selon ces deux directions axiale et radiale, et ainsi d'obtenir une contraction élastique dudit organe de suspension, lorsque ce dernier est comprimé par le poussoir.

De la sorte, la raideur apparente dudit organe de suspension augmente avantageusement au fur et à mesure que le poussoir s'enfonce axialement dans la chemise, lorsque ledit poussoir est repoussé par la crémaillère. Cet effet peut en particulier devenir progressivement de plus en plus perceptible lorsque le jeu axial fonctionnel du dispositif s'accroît avec l'usure.

On peut ainsi obtenir, selon une caractéristique qui peut constituer une invention en tant que telle, un amortissement adaptatif et progressif du poussoir, amortissement qui tend à se durcir avec le recul du poussoir sous la contrainte de la crémaillère (et, inversement, qui tend à s'assouplir lors de la remontée dudit poussoir vers la crémaillère).

Cette gestion dynamique de la raideur de l'organe de suspension permet d'obtenir un dosage fin et efficace de l'amortissement, et plus particulièrement une résistance accrue à l'enfoncement trop marqué du poussoir qui limite voire empêche, en cas de chocs affectant la crémaillère, les à-coups et les bruits provoqués d'ordinaire par un amortissement devenu ponctuellement insuffisant car trop lâche au regard de la situation de choc.

Par ailleurs, la fabrication du dispositif conforme à l'invention ne requiert que peu d'opérations d'usinage et d'assemblage, et un outillage relativement simple, puisqu'il suffit de dresser un épaulement à la surface latérale du poussoir puis d'enfiler axialement sur ledit poussoir l'organe élastique de suspension jusqu'à amener celui-ci en butée contre ledit épaulement.

En particulier, on remarquera qu'il n'est plus nécessaire de prévoir une pluralité de pièces amortisseuses distinctes étagées le long du poussoir et spécifiquement dédiées à l'amortissement radial, ni *a fortiori* de creuser une pluralité de gorges correspondantes dans ledit poussoir.

Une fois l'équipage poussoir/organe élastique de suspension constitué, on peut du reste aisément engager axialement ledit équipage dans la chemise, sans véritable risque de déloger, pincer ou cisailler un joint.

La fabrication, l'assemblage, et l'entretien du dispositif s'en trouvent ainsi simplifiés, et réalisables à moindre coût.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe dans le plan contenant l'axe longitudinal de coulissement (YY') de la crémaillère et l'axe de poussée (ZZ') du dispositif de rattrapage de jeu, un module de direction assistée équipé d'un dispositif de rattrapage de jeu selon l'invention.
La figure 2 illustre, selon une vue partielle en coupe selon l'axe de poussée (ZZ'), le détail du dispositif de rattrapage de jeu utilisé dans le module de direction de la figure 1, en configuration avancée du poussoir dans le demi-plan gauche, et en configuration reculée (enfoncée) du poussoir dans le demi-plan droit, de sorte à faire apparaître (avec exagération) la course axiale fonctionnelle dudit poussoir.
La figure 3 illustre, selon une vue éclatée en perspective, un exemple d'équipage tel que mis en oeuvre au sein du module de direction de la figure 1, ledit équipage comprenant un poussoir, un organe élastique de suspension et un patin d'interface selon l'invention.

La présente invention concerne un dispositif 1 de rattrapage de jeu pour crémaillère.

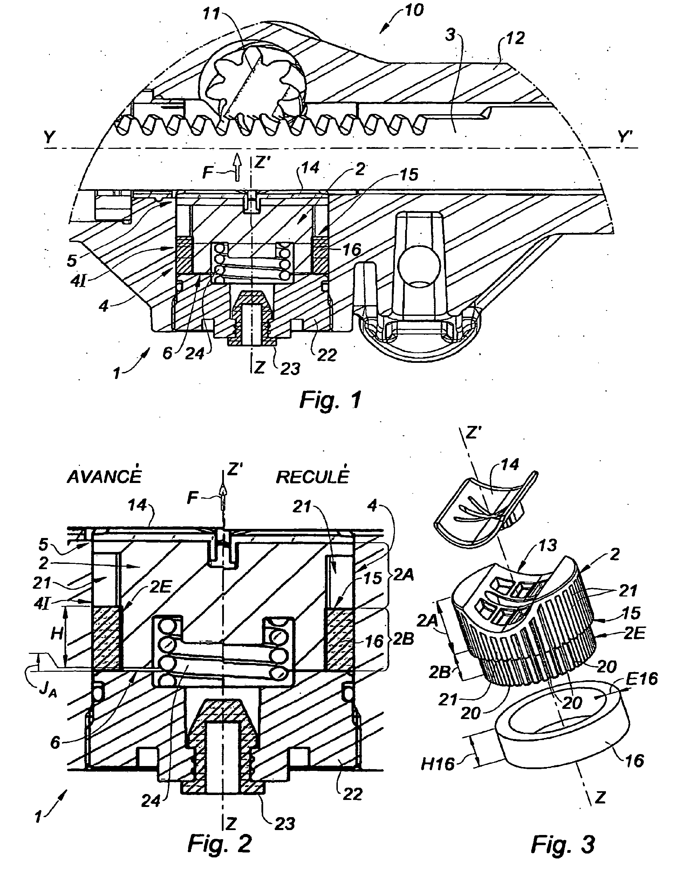

A cet effet, ledit dispositif 1 comprend, tel que cela est visible sur la figure 1, un poussoir 2 destiné à venir exercer un effort de poussée F contre une crémaillère 3, ledit poussoir 2 étant monté mobile et guidé en translation, selon un axe de poussée (ZZ'), dans une chemise 4 qui s'étend, selon ledit axe de poussée (ZZ'), entre une ouverture d'accès 5 destinée à déboucher sur la crémaillère 3 et une butée de retenue 6 formant obstacle au recul axial du poussoir 2.

L'invention concerne également en tant que tel un module de direction 10, de préférence de direction assistée, qui comporte au moins un pignon d'entraînement 11, qui est entraîné par une colonne de direction (liée par exemple à un volant de conduite) et/ou par un moteur d'assistance, de préférence électrique ou hydraulique, et qui engrène sur une crémaillère 3 pour faire coulisser celle-ci, selon un axe de coulissement (YY'), dans un carter de direction 12, de sorte à pouvoir manoeuvrer des organes directeurs devant être couplés à ladite crémaillère 3, tels que des roues directrices (non représentées).

De préférence, l'axe de coulissement (YY') coïncide avec la direction d'extension longitudinale de la crémaillère 3, et, par ailleurs, avec la direction latérale transverse (gauche-droite) du véhicule équipé dudit module de direction 10.

Selon l'invention, ledit module 10 comporte au moins un dispositif de rattrapage de jeu 1 selon l'invention, dont le poussoir 2 vient presser transversalement la crémaillère 3 contre le pignon 11, selon un axe de poussée (ZZ') sensiblement transverse, et de préférence sensiblement perpendiculaire, à l'axe de coulissement (YY').

Avantageusement, le poussoir 2 formera ainsi une sorte de piston capable d'alterner, dans les limites d'une course axiale J_{A} (figure 2) prédéfinie par construction, mouvements d'avance axiale vers la crémaillère 3 et le pignon 11 et mouvements de recul axial dans le sens opposé, afin d'accommoder élastiquement les variations de la configuration d'engrènement liées notamment aux conditions de sollicitation de la crémaillère 3 ou aux tolérances de fabrication et d'assemblage du pignon 11 et de ladite crémaillère 3.

Par commodité de réalisation, le poussoir 2, et plus particulièrement son enveloppe radialement externe 2E, ainsi que la paroi radialement interne 41 de la chemise 4 qui assure le guidage dudit poussoir, présenteront préférentiellement une géométrie cylindrique de révolution, centrée sur l'axe de poussée (ZZ').

De préférence, le poussoir 2 vient s'appliquer contre le dos de la crémaillère 3, à l'opposé de la denture de celle-ci, par une extrémité (ici supérieure sur les figures) qui est aménagée de sorte à former un berceau 13 concave, de préférence hémi-cylindrique de base circulaire, qui est conçu pour épouser sensiblement la forme du dos de ladite crémaillère 3.

Tel que cela est illustré notamment sur la figure 3, le berceau 13 peut avantageusement être garni d'un patin 14, par exemple en matériau polymère, du type polyamide (PA) renforcé, ou en matériau métallique de type acier revêtu de polymère, et notamment de PTFE, destiné à favoriser le glissement de la crémaillère sur le poussoir 2, transversalement à l'axe de poussée (ZZ') de ce dernier.

Ledit patin 14 offrira avantageusement une surface de glissement sensiblement lisse pour la crémaillère 3, dans un matériau distinct de celui constitutif de ladite crémaillère, surface qui pourra par ailleurs comporter des dépressions de type rainures formant des réserves pour un lubrifiant.

Selon l'invention, le poussoir 2 présente un épaulement 15 qui reçoit un organe 16 élastique de suspension bidirectionnelle, ledit organe 16 élastique de suspension étant ainsi engagé entre le poussoir 2 et la chemise 4 de sorte à former simultanément, d'un seul tenant, d'une part une cale élastique de suspension axiale qui assure, selon l'axe de poussée (ZZ'), un contact axial élastique entre l'épaulement 15 du poussoir et la butée de retenue 6 de la chemise 4, et d'autre part une cale élastique de suspension radiale qui assure un contact radial élastique, transversalement à l'axe de poussée (ZZ'), entre le poussoir 2, et plus particulièrement l'enveloppe radialement externe 2E dudit poussoir 2, et paroi interne 41 de la chemise 4.

Avantageusement, un même organe 16 de « suspension » (c'est-à-dire de soutien élastique du poussoir 2 mobile au sein de la chemise 4 fixe, par analogie avec le principe de suspension d'un véhicule automobile) forme une sorte d'entretoise bidirectionnelle élastiquement déformable, et plus particulièrement compressible, ce qui permet, selon l'invention, d'offrir une résistance souple à l'encontre des déplacements du poussoir 2 selon au moins deux directions sécantes distinctes, en l'espèce une résistance au recul axial, qui, tout en autorisant un léger débattement amorti selon une première direction axiale, favorise le maintien de la crémaillère 3 au contact contre le pignon 11, et d'autre part une résistance au débattement radial dudit poussoir 2, selon une seconde direction radiale transverse à la première, qui évite notamment que ledit poussoir 2 et la paroi interne 41 de la chemise ne s'entrechoquent.

Centrage et rappel élastique du coulisseau formé par le poussoir 2 seront donc assurés efficacement par un organe de suspension 16, de préférence unique, selon un agencement qui est avantageusement particulièrement simple, léger, compact et robuste.

De préférence, tel que cela est illustré sur les figures 1 à 3, le poussoir 2 se présentera sous la forme d'un piston étagé comprenant d'une part un tronçon de tête 2A destiné à soutenir la crémaillère 3, et dans lequel sera de préférence creusé le berceau 13, et d'autre part un tronçon de pied 2B, situé axialement à l'opposé de la crémaillère 3 et du berceau 13 par rapport au tronçon de tête 2A, et dont le diamètre sera strictement inférieur à celui dudit tronçon de tête 2A, et de préférence constant, l'épaulement 15 marquant alors la transition radiale (réduction de diamètre) entre le tronçon de tête 2A et le tronçon de pied 2B.

Ici encore, un tel agencement contribue à la simplicité de réalisation et d'assemblage du poussoir 2, ainsi qu'à la rigidité structurelle et à la robustesse de ce dernier.

De façon particulièrement préférentielle, tel que cela est illustré sur les figures 1 à 3, l'organe élastique de suspension bidirectionnelle 16 est formé par une bague élastique enfilée autour du poussoir 2, en butée contre l'épaulement 15 de ce dernier.

Ledit organe de suspension 16 pourra ainsi être assimilé à une bague élastique dans ce qui suit, sans que cela ne constitue une restriction de l'invention.

La bague élastique 16 est avantageusement emboîtée sur le poussoir 2, de façon coaxiale à ce dernier. On observe ainsi, sur au moins une plage axiale, voire sur la totalité, du tronçon de pied 2B, une superposition radiale de l'enveloppe externe 2E du poussoir 2, de la bague 16, puis de la paroi latérale interne 41 chemise 4, dans cet ordre.

Avantageusement, un tel emboîtement, outre qu'il offre une grande simplicité de fabrication, assure un cerclage annulaire tous azimuts du poussoir 2 autour de l'axe de poussée (ZZ'), ce qui procure un effet de centrage ainsi qu'un maintien élastique du poussoir 2 dans la chemise 4 qui est particulièrement stable et équilibré.

L'utilisation d'une telle bague 16 permet notamment d'obtenir un contact continu, tant axial que radial, entre le poussoir 2 et la chemise 4, sur la majorité voire la totalité du pourtour du poussoir 2, dont ladite bague 16 épouse la forme.

La hauteur axiale H16 de l'organe élastique de suspension 16, et plus particulièrement de la bague, sera de préférence choisie pour offrir, au moyen d'un seul organe de suspension 16, une portée de guidage suffisante pour réduire voire empêcher le basculement radial parasite en tangage du poussoir 2 lors du coulissement axial de ce dernier.

A titre indicatif, la hauteur axiale utile H de recouvrement du poussoir 2 par un même organe élastique 16 pourra être sensiblement comprise entre 15 mm et 25 mm.

De préférence, la hauteur axiale H16 de la bague 16 est par ailleurs choisie supérieure à celle H du tronçon de pied 2B que ladite bague 16 habille, de telle manière que, lorsque le poussoir 2 se trouve en position avancée maximale, dans sa position la plus proche du pignon 11, ou *a fortiori* lorsque l'équipage 2, 16 se trouve au repos, hors de la chemise 4, avant l'assemblage du module de direction 10, la bague 16, une fois en appui contre l'épaulement 15, fait, à son extrémité opposée audit épaulement 15, légèrement saillie axiale par rapport à l'extrémité libre du tronçon de pied 2B.

Cette saillie est le cas échéant choisie supérieure ou égale au jeu axial J_{A} correspondant à la course axiale fonctionnelle souhaitée.

Ainsi, dans le sens de l'enfoncement du poussoir 2, c'est la bague 16 qui est d'abord bloquée axialement par la butée de retenue 6, contre laquelle ladite bague 16 vient prendre appui tandis que le poussoir 2 se trouve encore en retrait de cette même butée 6, de telle sorte que ledit poussoir 2 n'interfère pas, dans cette plage de fonctionnement normal, avec ladite butée de retenue 6, et par conséquent ne contrarie pas l'effet d'amortissement élastique procuré par la bague 16.

A titre indicatif, la hauteur à vide H16 de la bague 16, en l'absence de compression axiale, pourra ainsi être supérieure à la hauteur utile de recouvrement H susmentionnée d'environ 0,2 mm à 1 mm.

De préférence, la bague élastique 16 présente une section transverse sensiblement rectangulaire, dont les petits côtés (chants) viennent en appui axial respectivement contre l'épaulement 15 et contre la butée de retenue 6, et dont les grands côtés viennent en appui radial respectivement contre la surface externe (enveloppe externe) 2E du poussoir 2 et la paroi interne 41 correspondante de la chemise 4.

Avantageusement, un tel agencement, selon lequel la bague 16 se trouve pincée en sandwich, tant axialement que radialement, entre le poussoir 2 et la chemise 4, offre une grande simplicité de réalisation et d'assemblage.

En outre, cette configuration rectangulaire de la bague 16 permet de bénéficier d'une surface de contact très étendue, notamment pour le soutien radial du poussoir 2, ce qui procure un gain significatif en matière de précision et de stabilité du guidage, mais également de résistance à l'usure.

De préférence, la bague 16 formera une structure annulaire fermée d'un seul tenant, particulièrement robuste et au comportement très homogène. Cependant, il n'est pas exclu que la bague se présente sous forme d'un ruban plat qui s'enroule sur lui-même autour du poussoir 2, de telle sorte que ses deux extrémités, disjointes, se rejoignent sensiblement pour former une boucle fermée autour de l'axe de poussée (ZZ').

Dans tous les cas, l'épaisseur (radiale) E16 de la bague ou du ruban sera choisie suffisante pour assurer la fonction d'amortissement souhaitée.

A titre indicatif, cette épaisseur radiale E16 à vide, en l'absence de compression radiale, pourra être sensiblement comprise entre 1 mm et 3 mm, et ce en particulier dans le cas où l'organe de suspension 16 habille une enveloppe externe de poussoir 2E dont le diamètre est sensiblement compris entre 20 mm et 38 mm.

De façon préférentielle, et quelle que soit par ailleurs sa forme, l'organe élastique 16 de suspension bidirectionnelle est réalisé d'un seul tenant dans un matériau élastomère, par exemple en polyuréthane, en silicone, en caoutchouc, et notamment en caoutchouc NBR (« *Nitrile Butadiene Rubber* ») ou HNBR (« *Hydrogenated Nitrile Butadiene Rubber* »).

Ainsi, l'organe élastique 16, et plus particulièrement la bague, présente une grande simplicité et une bonne élasticité intrinsèque, ainsi qu'une bonne tenue aux sollicitations mécaniques.

A titre indicatif, l'élastomère choisi pourra présenter une dureté Shore A sensiblement comprise entre 70 ShA et 90 ShA.

Selon une variante de réalisation préférentielle, le poussoir 2 présente extérieurement des rainures 20, 21 axiales au moins dans sa portion recouverte par l'organe élastique de suspension bidirectionnelle 16.

Plus particulièrement, le tronçon de pied 2B pourra comporter une pluralité de rainures 20 de pied, parallèles à l'axe de poussée (ZZ'), qui débouchent radialement sur l'enveloppe externe 2E, et qui débouchent de préférence axialement sur l'extrémité axiale libre du tronçon de pied (l'extrémité inférieure du poussoir 2 sur les figures 1 à 3), de telle sorte que ladite enveloppe externe 2E présente un aspect cannelé.

Avantageusement, ces rainures 20 de pied pourront contribuer à limiter le frottement du poussoir 2 contre la face radialement interne de la bague 16 lors des déplacements dudit poussoir 2.

Selon une caractéristique particulièrement avantageuse qui peut constituer une invention à part entière, lesdites rainures 20 de pied pourront former des interstices de dégagement dans laquelle la matière constitutive de la bague 16 pourra refluer au moins en partie (ici de façon centripète) lorsqu'elle tendra à être chassée radialement, sous l'effet de compression axiale de ladite bague 16 provoqué par le recul du poussoir 2 en direction de la butée de retenue 6.

On améliorera ainsi l'élasticité de la bague 16 et l'étendue de la course axiale correspondante offerte par ladite bague 16.

En outre, une telle disposition améliorera également globalement le comportement et la tenue sous charge cyclique de la bague 16, et par conséquent la longévité du dispositif 1.

La largeur d'ouverture (dimension orthoradiale) de telles rainures 20 de pied pourra à cet effet être sensiblement comprise entre 1 mm et 5 mm.

De manière analogue, le tronçon de tête 2A pourra comporter (ou non) une pluralité de rainures de tête 21, également parallèles à l'axe de poussée (ZZ'), qui pourront de préférence être de même largeur que les rainures de pied 20 et/ou se trouver dans le prolongement axial desdites rainures de pied 20, en coïncidence angulaire avec ces dernières.

Lesdites rainures de tête 21 pourront avantageusement déboucher axialement sur l'épaulement 15.

Quelle que soit leur implantation et leur fonction, les rainures 20, 21 axiales contribueront avantageusement à alléger le poussoir 2, sans nuire à sa stabilité ni à sa rigidité fonctionnelle.

Elles pourront également augmenter la précision de finition de l'enveloppe latérale externe 2E du poussoir, et par conséquent la qualité des guidages respectifs du tronçon de pied 2B au sein de la bague 16 et/ou du tronçon de tête 2A au contact direct de la paroi interne 41 de la chemise.

De préférence, tel que cela est illustré sur les figures 1 et 2, la butée de retenue 6 est formée par une culasse 22 pleine qui obture la chemise 4 à l'opposé de l'ouverture d'accès 5.

Ladite culasse 22 pourra de préférence prendre la forme d'un bouchon d'étanchéité, du genre trappe de visite, rapporté et fixé, par exemple vissé, à l'embouchure de la chemise 4.

La culasse 22 pourra en outre être bloquée en position, et plus particulièrement immobilisée en rotation, par collage ou même par déformation (lors d'un montage, et notamment d'un vissage, en force).

La culasse 22, et plus particulièrement l'extrémité dudit bouchon, offrira de préférence une surface appui avantageusement plane et normale à axe poussée (ZZ'), qui formera la butée de retenue 6 axiale.

La bague 16 bénéficiera ainsi d'un support étendu et stable, lui procurant une excellente assise.

Avantageusement cette surface d'appui formera une butée de retenue 6 commune à la bague 16, qui repose de préférence en permanence contre ladite surface d'appui, et, ponctuellement, au poussoir 2, lorsque ce dernier se trouve reculé au maximum, en fin de course (partie droite de la figure 2).

En outre, l'utilisation d'une culasse 22 formant trappe de visite facilitera grandement l'accès à la chemise 4, notamment à l'occasion du montage du dispositif 1, tout en protégeant le mécanisme logé à l'intérieur de la chemise 4 par une barrière étanche à la poussière, au lubrifiant, et aux projections d'eau.

La culasse 22 pourra éventuellement être pourvue d'un bouchon secondaire 23, tel qu'une vis, qui permettra d'accéder au poussoir 2, une fois ce dernier monté dans la chemise 4, afin d'en mesurer et d'en régler précisément le jeu axial de fonctionnement.

Il est par ailleurs envisageable que l'organe élastique de suspension 16, en l'espèce la bague, constitue le seul organe assurant le rappel élastique fonctionnel du poussoir 2 à l'encontre de la crémaillère 3 et du pignon 11.

Cependant, le dispositif 1 comporte de préférence un organe de rappel supplémentaire 24, du genre ressort hélicoïdal, distinct de l'organe élastique de suspension bidirectionnelle 16, et qui est agencé pour contraindre élastiquement le poussoir 2 vers la crémaillère 3.

Ledit organe de rappel supplémentaire 24, indépendant de la bague 16, pourra avantageusement créer ou renforcer une précontrainte axiale permanente, "à vide", sur le poussoir 2, et, partant, sur la crémaillère 3.

L'organe de rappel supplémentaire 24, et plus particulièrement le ressort hélicoïdal, pourra avantageusement prendre appui sur la culasse 22, et se loger de préférence au moins en partie, sinon en totalité, dans un moyeu creux du poussoir 2, et plus particulièrement du tronçon de pied 2B.

En disposant ainsi l'organe de rappel supplémentaire 24 en chevauchement axial au creux du poussoir 2, et de la bague 6, on obtient un dispositif 1 particulièrement compact, et de surcroît particulièrement stable.

Avantageusement, l'effort de poussée F, qu'il soit généré par la bague 16 et/ou par le ressort de rappel 24, présente ainsi sensiblement exclusivement une composante axiale, qui est colinéaire, et plus particulièrement centrée, sur l'axe de poussée (ZZ') qui correspond à l'axe générateur commun du poussoir 2, de la bague 16 et du ressort 24.

Bien entendu, la combinaison d'une bague 16 et d'un ressort supplémentaire 24 permettra de renforcer la raideur du mécanisme lors de l'enfoncement du poussoir 2 vers la culasse 22.

On pourra éventuellement envisager d'étager la prise en charge progressive du poussoir 2, au fur et à mesure de son recul, successivement par le ressort de rappel supplémentaire 24 seul tout d'abord, puis par la bague 16 et ledit ressort de rappel 24 ensemble ensuite.

Selon une telle variante de réalisation (non représentée), la hauteur axiale de la bague 16 pourrait être choisie de telle sorte que ladite bague 16 ne crée pas de contrainte permanente à vide sur le poussoir 2, notamment lorsque ledit poussoir se trouve en position avancée au plus près du pignon 11, un jeu axial résiduel étant éventuellement prévu à cet effet entre la bague 16 et la culasse 22 lorsque ledit poussoir se trouve dans ladite position avancée.

Toutefois, au sein du module de direction 10 conforme à l'invention, l'organe élastique de suspension bidirectionnelle 16 est de préférence agencé de sorte à se trouver en compression permanente au moins axialement, selon l'axe de poussée (ZZ'), et de préférence également radialement, transversalement audit axe de poussée (ZZ'), quelle que soit la position axiale, avancée (partie gauche de la figure 2) ou reculée (partie droite de la figure 2), du poussoir 2 appliqué contre la crémaillère 3.

Avantageusement, une telle précontrainte permanente, de préférence bidirectionnelle, garantit que la suspension du poussoir 2 au sein de la chemise 4 ne sera jamais lâche, de telle sorte que le dispositif 1 fonctionnera avantageusement sans jeu, ni heurts, ni bruits.

La hauteur axiale à vide H16 et l'épaisseur radiale à vide E16 de la bague 16 seront bien entendu adaptées en conséquence, pour assurer ce calage compressif permanent.

On notera à ce titre que le dispositif 1 sera de préférence réglé à l'état neuf, lors de sa mise en service, selon une configuration de calage compressif (notamment axial) permanent, et qu'il pourra éventuellement évoluer naturellement au fil du temps, du fait de l'usure progressive de ses constituants, vers une configuration plus lâche à prise en charge progressive, mais ce avantageusement sans perdre pour autant ses capacités d'amortissement élastique.

A titre indicatif, le jeu axial de fonctionnement J_{A} correspondant à la course axiale maximale disponible entre la position la plus avancée du poussoir 2 par rapport à l'axe (YY') de coulissement de la crémaillère 3 (partie gauche de la figure 2) et la position la plus reculée dudit poussoir en appui contre la butée de retenue 6 (enfoncement correspondant à la partie droite de cette même figure 2), c'est-à-dire l'écartement maximal prévu entre la face inférieure dudit poussoir 2 et la culasse 22, est de préférence inférieur ou égal à 0,5 mm, à 0,2 mm, et préférentiellement de l'ordre de 0,1 mm.

Plus particulièrement, le jeu axial J_{A} à neuf pourra être réglé à environ 0,1 mm, tandis que le jeu maximal en fin de vie, après usure des constituants du dispositif 1, pourra atteindre au plus quelques dixièmes de millimètre, par exemple environ 0,5 mm.

Avantageusement, la présente invention permet d'obtenir un fonctionnement doux, fiable et silencieux du module de direction, et ce, que le véhicule équipé soit en mouvement ou à l'arrêt.

## Revendications

1. Dispositif de rattrapage de jeu (1) pour crémaillère, ledit dispositif comprenant un poussoir (2) destiné à venir exercer un effort de poussée (F) contre une crémaillère (3), ledit poussoir (2) étant monté mobile et guidé en translation, selon un axe de poussée (ZZ'), dans une chemise (4) qui s'étend, selon ledit axe de poussée (ZZ'), entre une ouverture d'accès (5) destinée à déboucher sur la crémaillère (3) et une butée de retenue (6) formant obstacle au recul axial du poussoir, le poussoir (2) présentant un épaulement (15) qui reçoit un organe (16) élastique de suspension bidirectionnelle, ledit organe élastique de suspension (16) étant ainsi engagé entre le poussoir (2) et la chemise (4) de sorte à former simultanément, d'un seul tenant, d'une part une cale élastique de suspension axiale qui assure un contact axial élastique entre l'épaulement (15) du poussoir (2) et la butée de retenue (6) de la chemise (4), et d'autre part une cale élastique de suspension radiale qui assure un contact radial élastique, transversalement à l'axe de poussée (ZZ'), entre le poussoir (2) et paroi interne (41) de la chemise (4), le dispositif (1) étant **caractérisé en ce que** le poussoir (2) présente extérieurement des rainures axiales (20, 21) au moins dans sa portion recouverte par l'organe élastique de suspension bidirectionnelle (16).

2. Dispositif selon la revendication 1 **caractérisé en ce que** l'organe élastique de suspension bidirectionnelle (16) est formé par une bague élastique enfilée autour du poussoir (2), en butée contre l'épaulement (15) de ce dernier.

3. Dispositif selon la revendication 2 **caractérisé en ce que** la bague élastique (16) présente une section transverse sensiblement rectangulaire, dont les petits côtés viennent en appui axial respectivement contre l'épaulement (15) et contre la butée de retenue (6), et dont les grands côtés viennent en appui radial respectivement contre la surface externe (2E) du poussoir (2) et la paroi interne (41) correspondante de la chemise.

4. Dispositif selon l'une des revendications précédentes **caractérisé en ce que** l'organe élastique de suspension bidirectionnelle (16) est réalisé d'un seul tenant dans un matériau élastomère, par exemple en polyuréthane, en silicone, en caoutchouc, et notamment en caoutchouc NBR ou HNBR.

5. Dispositif selon l'une des revendications précédentes **caractérisé en ce que** la butée de retenue (6) est formée par une culasse (22) pleine qui obture la chemise (4) à l'opposé de l'ouverture d'accès (5).

6. Dispositif selon l'une des revendications précédentes **caractérisé en ce qu'**il comporte un organe de rappel supplémentaire (24), du genre ressort hélicoïdal, distinct de l'organe élastique de suspension bidirectionnelle (16), et qui est agencé pour contraindre élastiquement le poussoir (2) vers la crémaillère (3).

7. Module de direction (10), de préférence de direction assistée, comportant au moins un pignon d'entraînement (11) qui est entraîné par une colonne de direction et/ou un moteur d'assistance et qui engrène sur une crémaillère (3) pour faire coulisser celle-ci, selon un axe de coulissement (YY'), dans un carter de direction (12), de sorte à pouvoir manoeuvrer des organes directeurs devant être couplés à ladite crémaillère, tels que des roues directrices, ledit module étant **caractérisé en ce qu'**il comporte au moins un dispositif de rattrapage de jeu (1) selon l'une des revendications 1 à 6 dont le poussoir (2) vient presser transversalement la crémaillère (3) contre le pignon (11), selon un axe de poussée (ZZ') sensiblement transverse à l'axe de coulissement (YY').

8. Module de direction selon la revendication 7 **caractérisé en ce que** l'organe élastique de suspension bidirectionnelle (16) est agencé de sorte à se trouver en compression permanente au moins axialement, selon l'axe de poussée (ZZ'), et de préférence également radialement, transversalement audit axe de poussée (ZZ'), quelle que soit la position axiale, avancée ou reculée, du poussoir (2) appliqué contre la crémaillère (3).

9. Module de direction selon la revendication 7 ou 8 **caractérisé en ce que** le jeu axial de fonctionnement (J_{A}) correspondant à la course axiale maximale disponible entre la position la plus avancée du poussoir (2) par rapport à l'axe (YY') de coulissement de la crémaillère (3) et la position la plus reculée dudit poussoir (2) en appui contre la butée de retenue (6) est inférieur ou égal à 0,5 mm, à 0,2 mm, et de préférence de l'ordre de 0,1 mm.

## Patentansprüche

1. Vorrichtung zum Spielausgleich (1) für eine Zahnstange, wobei die besagte Vorrichtung einen Stößel (2) umfasst, der dazu bestimmt ist, eine Druckkraft (F) auf eine Zahnstange (3) auszuüben, wobei der besagte Stößel (2) beweglich und entlang einer Schubachse (ZZ') verschiebbar in einer Laufbuchse (4) montiert ist, die sich entlang der besagten Schubachse (ZZ') zwischen einer Zugangsöffnung (5), die dazu bestimmt ist, in die Zahnstange (3) zu münden, und einem Rückhalteanschlag (6) erstreckt, der ein Hemmnis für den axialen Rückstoß des Stößels bildet, wobei der Stößel (2) ein Ansatzstück (15) aufweist, das ein elastisches Aufhängungselement (16) zur bidirektionalen Aufhängung aufnimmt, wobei das besagte elastische Aufhängungselement (16) derart zwischen dem Stößel (2) und der Laufbuchse (4) eingebracht wird, um einteilig und gleichzeitig einerseits ein elastisches Lager zur axialen Aufhängung zu bilden, das einen axialen elastischen Kontakt zwischen dem Ansatzstück (15) des Stößels (2) und dem Rückhalteanschlag (6) der Laufbuchse (4) herstellt, und andererseits ein elastisches Lager zur radialen Aufhängung, das einen radialen elastischen Kontakt, quer zur Schubachse (ZZ') zwischen dem Stößel (2) und der Innenwand (4I) der Laufbuchse (4) erzeugt, wobei die Vorrichtung (1) **dadurch gekennzeichnet ist, dass** der Stößel (2) außen zumindest in jenem Abschnitt axial verlaufende Nuten (20, 21) aufweist, der durch das elastische Aufhängungselement (16) zur bidirektionalen Aufhängung bedeckt wird.

2. Vorrichtung nach Anspruch 1, **dadurch gekennzeichnet, dass** das elastische Aufhängungselement (16) zur bidirektionalen Aufhängung durch einen elastischen Ring gebildet wird, der um den Stößel (2) herum auf Anschlag gegen das Ansatzstück (15) von letzterem schoben wird.

3. Vorrichtung nach Anspruch 2, **dadurch gekennzeichnet, dass** der elastische Ring (16) einen in etwa rechteckigen Querschnitt aufweist, dessen kurze Enden sich axial jeweils am Ansatzstück (15) und am Rückhalteanschlag (6) anlegen, und dessen lange Enden sich radial jeweils an der Außenfläche (2E) des Stößels (2) und an der entsprechenden Innenwand (4I) der Laufbuchse anlegen.

4. Vorrichtung nach einem der vorherigen Ansprüche, **dadurch gekennzeichnet, dass** das elastische Aufhängungselement (16) zur bidirektionalen Aufhängung einteilig aus einem Elastomer-Werkstoff, beispielsweise aus Polyurethan, aus Silikon, aus Gummi, und vor allem aus NBR oder HNBR gefertigt ist.

5. Vorrichtung nach einem der vorherigen Ansprüche, **dadurch gekennzeichnet, dass** der Rückhalteanschlag (6) aus einem vollen Verschluss (22) gebildet wird, der die Laufbuchse (4) gegenüber der Zugangsöffnung (5) verschließt.

6. Vorrichtung nach einem der vorherigen Ansprüche, **dadurch gekennzeichnet, dass** sie ein zusätzliches Rückholelement (24) in der Art einer Schraubenfeder umfasst, das sich vom elastischen Aufhängungselement (16) zur bidirektionalen Aufhängung unterscheidet, und das angeordnet ist, um den Stößel (2) elastisch an der Zahnstange (3) zu halten.

7. Lenkmodul (10), vorzugsweise einer Servo-Lenkung, das zumindest ein Antriebsritzel (11) umfasst, das durch eine Lenksäule und/ oder einen Unterstützungsmotor angetrieben wird, und das in eine Zahnstange (3) eingreift, um diese in einem Lenkgehäuse (12) entlang einer Gleitachse (YY') gleiten zu lassen, um die Lenkelemente, wie beispielsweise die gelenkten Räder, steuern zu können, die mit der besagten Zahnstange zu verkoppeln sind, wobei das besagte Modul **dadurch gekennzeichnet ist, dass** es zumindest eine Vorrichtung zum Spielausgleich (1) nach einem der Ansprüche 1 bis 6 umfasst, deren Stößel (2) die Zahnstange (3) quer entlang einer Schubachse (ZZ') gegen das Ritzel (11) drückt, die in etwa quer zur Gleitachse (YY') verläuft.

8. Lenkmodul nach Anspruch 7, **dadurch gekennzeichnet, dass** das elastische Aufhängungselement (16) zur bidirektionalen Aufhängung derart angeordnet ist, um sich in dauerhafter Kompression zumindest axial, entlang der Schubachse (ZZ'), und vorzugsweise auch radial, senkrecht zur besagten Schubachse (ZZ') zu befinden, unabhängig von der vorderen oder hinteren axialen Stellung des an der Zahnstange (3) anliegenden Stößels (2).

9. Lenkmodul nach Anspruch 7 oder 8, **dadurch gekennzeichnet, dass** das axiale Funktionsspiel (J_{A}), das dem maximalen axialen Weg entspricht, der zwischen der vordersten Position des Stößels (2) im Verhältnis zur Gleitachse (YY') der Zahnstange (3) und der hintersten Position des besagten Stößels (2) auf Anschlag gegen den Rückhalteanschlag (6) verfügbar ist, kleiner oder gleich 0,5 mm, 0,2 mm ist und vorzugsweise in der Größenordnung von 0,1 mm liegt.

## Claims

1. A clearance compensating device (1) for a rack, said device comprising a pusher (2) intended to exert a thrust force (F) against a rack (3), said pusher (2) being movably mounted and guided in translation along a thrust axis (ZZ') within a jacket (4) extending along said thrust axis (ZZ') between an access opening (5) intended to open on the rack (3) and a retaining abutment (6) forming an obstacle to the axial retraction of the pusher, the pusher (2) presenting a shoulder (15) which receives a resilient bidirectional suspension member (16), said resilient suspension member (16) being thus engaged between the pusher (2) and the jacket (4) so as to simultaneously form in one single-piece, on the one hand a resilient axial suspension wedge that ensures a resilient axial contact between the shoulder (15) of the pusher (2) and the retaining abutment (6) of the jacket (4), and on the other hand a resilient radial suspension wedge that ensures a resilient radial contact, transversely to the thrust axis (ZZ'), between the pusher (2) and inner wall (4I) of the jacket (4), the device (1) being **characterized in that** the pusher (2) presents, externally, axial grooves (20, 21) at least in its portion covered by the resilient bidirectional suspension member (16).

2. The device according to claim 1 **characterized in that** the resilient bidirectional suspension member (16) is formed by an elastic ring fitted around the pusher (2), and abutting against the shoulder (15) of the latter.

3. The device according to claim 2 **characterized in that** the elastic ring (16) has a substantially rectangular cross section, whose short sides bear axially against the shoulder (15) and against the retaining abutment (6), respectively, and whose long sides bear radially against the outer surface (2E) of the pusher (2) and the corresponding inner wall (4I) of the jacket, respectively.

4. The device according to any of the preceding claims **characterized in that** the resilient bidirectional suspension member (16) is made in one single-piece of an elastomeric material, for example polyurethane, silicone, rubber, and in particular NBR or HNBR rubber.

5. The device according to any of the preceding claims **characterized in that** the retaining abutment (6) is formed by a solid plug (22) which closes the jacket (4) opposite to the access opening (5).

6. The device according to any of the preceding claims **characterized in that** it includes an additional return member (24) of the helical spring type, distinct from the resilient bidirectional suspension member (16), and which is arranged to elastically constrain the pusher (2) toward the rack (3).

7. A steering module (10), preferably a power assisted steering module, including at least one drive pinion (11) which is driven by a steering column and/or an assist motor and which meshes on a rack (3) in order to make it slide along a sliding axis (YY') in a steering case (12) so as to be able to operate steered members to be coupled to said rack, such as steered wheels, said module being **characterized in that** it includes at least one clearance compensating device (1) according to one of claims 1 to 6 whose pusher (2) transversely presses the rack (3) against the pinion (11), along a thrust axis (ZZ') substantially transverse to the sliding axis (YY').

8. The steering module according to claim 7 **characterized in that** the resilient bidirectional suspension member (16) is arranged to be in permanent compression at least axially along the thrust axis (ZZ'), and preferably also radially, transversely to said thrust axis (ZZ'), regardless of the forward or backward axial position of the pusher (2) applied against the rack (3).

9. The steering module according to claim 7 or 8 **characterized in that** the operating axial clearance (J_{A}) corresponding to the maximum axial stroke available between the most advanced position of the pusher (2) relative to the sliding axis (YY') of the rack (3) and the most retracted position of said pusher (2) bearing against the retaining abutment (6) is less than or equal to 0.5 mm, to 0.2 mm, and preferably in the order of 0.1 mm.
